# FASCICULE DE BREVET EUROPEEN

(11) **EP 1 183 423 B1**
(45) Date de publication et mention de la délivrance du brevet: **28.02.2007**
(21) Numéro de dépôt: 00938868.7
(22) Date de dépôt: 31.05.2000
(51) Int. Cl.: D21H 17/28, D21H 17/29, C08L 3/08

(54) **COMPOSITION ET PROCEDE POUR LA FABRICATION DE STRUCTURES PLANES, EN PARTICULIER DU PAPIER OU DU CARTON**
ZUSAMMENSETZUNG UND VERFAHREN ZUR HERSTELLUNG VON FLÄCHENGEBILDEN, INSBESONDERE VON PAPIER ODER KARTON
COMPOSITION AND METHOD FOR THE PRODUCTION OF PLANAR STRUCTURES, ESPECIALLY STRUCTURES MADE OF PAPER OR CARDBOARD

(30) Priorité: 04.06.1999 FR 9907086
(43) Date de publication de la demande: 06.03.2002
(73) Titulaire: Roquette Frères, 62136 Lestrem (FR)
(72) Inventeur: LOKIETEK, Bruno, F-62670 Mazingarbe (FR); LEFER, Pierre, F-59660 Merville (FR); DONDEYNE, Marcel, F-62232 Hinges (FR); MERLE DU BOURG, Régis, F-59110 La Madeleine (FR); LADRET, Marika, F-59840 Lompret (FR)
(74) Mandataire: Touati, Catherine
(86) Numéro de dépôt international: PCT/FR2000/001504
(87) Numéro de publication internationale: WO 2000/075425

(56) Documents cités:
- EP-A- 0 282 415
- WO-A-99/02597
- DATABASE WPI Section Ch, Week 199340 Derwent Publications Ltd., London, GB; Class A11, AN 1993-318011 XP002130349 & JP 05 230792 A (SANWA KOSAN KK), 7 septembre 1993 (1993-09-07)

## Description

La présente invention vise un nouveau procédé de fabrication de structures planes, du papier ou du carton, mettant en oeuvre une composition à base de matière amylacée

Le terme " fabrication " doit ici être entendu comme comprenant tout traitement interne ou " en masse " selon lequel ladite composition, sous forme de colle ou non, est répartie totalement ou majoritairement dans la masse constitutive de la structure plane résultante.

Le traitement interne peut par ailleurs résulter de :
- l'utilisation "en masse" de la structure plane par mise en oeuvre, simultanée ou non, d'une part de ladite composition sous forme de colle et d'autre part de ladite composition sous une forme autre qu'une colle, ou
- la floculation de fibres, par exemple de céramique, au sein de la structure plane suite à la mise en oeuvre de ladite composition, ou
- l'utilisation de ladite composition pour stabiliser des émulsions d'agents de collage, par exemple à base de produits connus sous les abréviations de " ASA " ou " AKD ", ou

Dans le domaine papetier, les besoins de rentabilité économique font que l'on assiste de plus en plus à :
- l'utilisation de pâtes issues de fibres cellulosiques de récupération (" FCR ") et à la détérioration de la qualité de ces FCR en raison du nombre toujours croissant de recyclages de " vieux papiers ", et
- la fermeture systématique des circuits et donc à l'enrichissement des eaux de fabrication en matières en suspension ou solubles, organiques et minérales, et notamment en espèces anioniques, communément appelées " anionic trash " qui perturbent la fixation de l'amidon cationique sur la fibre.

Ces phénomènes se traduisent par une baisse inéluctable de l'efficacité des amidons, notamment cationiques, et de la solidité des papiers ainsi que par une augmentation quasi-systématique des besoins d'épuration des eaux d'égouttage des machines à papier ou " eaux sous toile ".

Pour pallier ces problèmes, il a été préconisé de faire appel à des amidons amphotères, à savoir contenant à la fois des groupements cationiques et anioniques comme décrit dans les brevets FR 2.289.674 ou EP 257.338. Cependant, la complexité et le coût de préparation de ces amidons, leurs performances insuffisantes et/ou leurs potentialités d'application limitées, en réduisent l'intérêt industriel.

Il a également été exploité des techniques dites " duales " par lesquelles on introduit successivement, dans un ordre quelconque, un polymère cationique et un composé anionique d'origine minérale ou organique. Une telle technique mettant en oeuvre de manière obligatoirement séparée un amidon cationique et un amidon anionique est notamment décrite dans le brevet EP 282.415 au nom de la Demanderesse. Ce procédé permet une bonne fixation des amidons mais a pour principal inconvénient d'imposer en pratique l'installation de deux unités de cuisson, l'une pour solubiliser l'amidon cationique, l'autre pour solubiliser l'amidon anionique. En outre, la quantité totale d'amidons fixés à la cellulose n'est pas toujours suffisante pour conférer au papier les caractéristiques physiques souhaitées.

Par ailleurs, la technique duale utilisant un dérivé silicique comme composant anionique (brevet EP 41.056) a dû être perfectionnée au cours du temps en vue de répondre aux exigences (techniques, économiques et/ou réglementaires) toujours plus pressantes auxquelles sont confrontées les papeteries. Ces perfectionnements, décrits par exemple dans les brevets EP 349.366 et EP 490.425, améliorent généralement la rétention des charges et des fibres. Ils sont cependant complexes et ne permettent pas toujours d'augmenter ou de rendre acceptables les caractéristiques physiques du papier, notamment lorsque celui-ci a été fabriqué dans des conditions difficiles (taux élevé de FCR et/ou circuit très fermé).

C'est pourquoi on applique généralement un traitement de surface à l'une au moins des deux faces d'un tel papier, en vue d'accroître la proportion d'amidon, natif ou modifié, entrant dans la constitution du produit fini.

Cependant, cette opération de surfaçage entraîne un surcoût lié à l'équipement et à l'opération supplémentaire de séchage qu'il induit ainsi qu'une diminution très importante (généralement 15 à 25 %) de la vitesse des machines et donc de leur productivité.

Récemment, il a été proposé par le brevet JP 08296193-A de mettre en oeuvre au sein de la suspension fibreuse un " complexe polyionique d'amidon amphotère ". Ce procédé permettrait de préparer des cartons offrant des propriétés améliorées de désagrégation et d'aptitude au contrecollage et ce, sans nuire à la bonne marche des machines à papier. Il apparaît cependant que pour obtenir des complexes dispersibles et uniformes, et donc véritablement efficaces 1) le pH de la suspension aqueuse d'amidons cationique et anionique doit obligatoirement être ajusté entre pH 3 et 6, de préférence entre pH 4 et 5 par ajoût d'acide minéral ou organique et 2) la suspension acidifiée ainsi obtenue doit obligatoirement être gélatinisée sur un cuiseur fonctionnant en continu. Pour éviter ou diminuer les propriétés floculantes du complexe, il est également conseillé de limiter le degré de substitution (" DS ") de l'amidon anionique à une valeur au plus égale à 0,05.

En suite de quoi, le procédé préconisé est compliqué de mise en oeuvre, notamment en vue d'obtenir les complexes souhaités.

Il a désormais été trouvé qu'il était possible d'améliorer la performance d'un tel procédé et ce, tout en le rendant plus simple et, en particulier, sans rendre obligatoire l'étape précitée d'ajustement du pH de la suspension d'amidons, avant cuisson.

La Société Demanderesse a notamment constaté qu'en sélectionnant soigneusement la nature de la matière amylacée anionique utilisée dans un tel procédé, il était possible d'améliorer encore la fixation des amidons et/ou la rétention des fibres et charges au sein de la structure plane résultante ainsi que les caractéristiques physiques de cette structure. Ceci, sans devoir impérativement mettre en oeuvre les conditions de pH et de cuisson rendues nécessaires par les enseignements du brevet JP 08296193-A précité.

De manière plus précise, la présente invention a pour objet un procédé mettant en oeuvre une composition pour la fabrication de structures planes, caractérisée par le fait qu'elle contient au moins une matière amylacée cationique et au moins une matière amylacée sulfonée.

Par " matière amylacée " au sens de la présente invention, on entend notamment les amidons, d'origine naturelle ou hybride, y compris ceux issus de mutations ou manipulations génétiques. Ces amidons natifs peuvent notamment être issus de pomme de terre, de pomme de terre à haute teneur en amylopectine (pomme de terre waxy), de maïs, de blé, de maïs à haute teneur en amylose, de riz, de pois ou de manioc, des coupes ou fractions qui peuvent être faites ou obtenues telles que l'amylose, l'amylopectine, les coupes granulométriques connues de l'homme de l'art sous les vocables d'amidon de blé " A " et amidon de blé " B ", et les mélanges quelconques d'au moins deux quelconques des produits susmentionnés, par exemple un mélange d'amidon de maïs et de fécule de pomme de terre. Les matières amylacées peuvent également consister en des farines ou autres mélanges contenant amidon(s) et protéïne(s) végétale(s), le composant " amidon(s) " étant majoritaire.

Par " matière amylacée " on entend également, en particulier, les amidons susdécrits qui ont subi l'une au moins des opérations de fluidification, notamment chimique et/ou enzymatique, de prégélatinisation ou de solubilisation, notamment thermique et/ou chimique. Ainsi toute matière amylacée, fluidifiée ou non, contenue dans la composition selon l'invention peut se trouver à l'état granulaire non gonflé (amidon cru), à l'état granulaire à différents stades de gonflement (amidon prégélatinisé) et/ou à l'état solubilisé.

Les matières amylacées cationiques utilisables selon l'invention peuvent avoir été obtenues par n'importe lequel des procédés connus de cationisation en milieu aqueux, en milieu solvant ou en phase sèche dès lors que ce procédé permet à un ou plusieurs groupement(s) azoté(s) de nature électropositive de se fixer sur une matière amylacée. Ces groupements azotés peuvent notamment renfermer un atome d'azote tertiaire ou quaternaire. Le taux d'azote fixé présenté par ces matières amylacées cationiques peut se situer dans une large gamme, en particulier entre 0,1 et 3 % environ. Selon une variante de l'invention, ce taux d'azote fixé et au moins égal à 0,5 %, de préférence compris entre 0,6 et 2 %, ces pourcentages étant exprimés en poids d'azote par rapport au poids sec de la matière amylacée cationique.

Les matières amylacées anioniques sélectionnées selon l'invention peuvent avoir été obtenues par n'importe lequel des procédés connus, en une ou plusieurs étapes, de sulfonation et notamment de préparation d'amidons sulfocarboxylés, sulfoalcoylés ou sulfoalcénylés.

De tels procédés sont décrits dans les brevets US 2,825,727, US 4,379,919 et US 4,387,221.

La partie carboxylique du groupement sulfocarboxylé fixé, en un ou plusieurs endroits, sur la matière amylacée peut avoir été générée par mise en oeuvre de l'un quelconque des anhydrides, saturés ou insaturés, décrits dans ces brevets ou dans les brevets précédents US 2, 461, 139 ou US 2,668,156. A titre d'exemples, il peut s'agir des anhydrides acétique, propionique, butyrique, succinique, maléïque, phtalique, glutarique, itaconique, citraconique, adipique, azélaïque, crotonique ou méthacrylique.

La partie sulfonée du groupement peut notamment avoir été générée par mise en oeuvre d'un bisulfite, par exemple de sodium, potassium ou ammonium.

Par ailleurs, le groupement sulfoné peut avoir été généré en une seule étape par mise en oeuvre, en particulier, soit d'un acide sulfonique soit d'un anhydride sulfocarboxylique comme décrit dans les brevets US 2,825,727, US 4,379,919 et US 4,387,221 précités.

Un groupement sulfocarboxylé peut notamment porter également un groupement alcoyle ou alcényle (brevet US 4,387,221) ou un second groupement sulfoné (brevet US 4,379,919).

De manière avantageuse, la matière amylacée sulfonée contenue dans la composition selon l'invention est choisie parmi les amidons monosulfocarboxylés et disulfocarboxylés.

La Société Demanderesse a trouvé qu'un tel amidon, par exemple un monosulfosuccinate d'amidon, associé en mélange avec un amidon cationique, permettait d'atteindre des performances papetières supérieures à celles observées, dans les mêmes conditions, avec d'autres amidons anioniques tels qu'un amidon carboxylé non sulfoné ou un amidon phosphaté.

Le DS en groupements sulfonés de la matière amylacée sulfonée peut être compris dans une très large gamme de valeurs, par exemple entre 0,005 et 0,5 environ, en particulier entre 0,01 et 0,3. On peut, par exemple, utiliser un monosulfocarboxylate d'amidon présentant un DS compris entre 0,02 et 0,2.

Selon une autre variante, la composition selon l'invention présente un ratio pondéral entre matière(s) amylacée(s) cationique(s) d'une part et matière(s) amylacée(s) sulfonée(s) d'autre part (sec/sec), compris entre 10/1 et 1/10, de préférence compris entre 10/1 et 1/5, et plus préférentiellement encore entre 5/1 et 1/4. Ce ratio peut, par exemple, se situer entre 3/1 et 1/3.

La composition selon l'invention peut être exclusivement constituée d'au moins une matière amylacée cationique et d'au moins une matière amylacée sulfonée.

Elle peut contenir de l'eau autre que l'eau naturellement présente dans toute matière amylacée et/ou au moins un autre composant, de préférence choisi parmi les agents de collage, les composés siliciques, les composés d'aluminium, les agents alcalins, les agents de rhéologie, les agents tensio-actifs et les agents bactéricides.

La composition selon l'invention peut se présenter sous la forme d'un mélange solide, de préférence pulvérulent, contenant au moins une matière amylacée cationique granulaire et au moins une matière amylacée sulfonée granulaire.

Selon une variante, ces matières amylacées granulaires se présentent chacune sous la forme exclusive ou majoritaire de granules à l'état cru, i.e non gonflés.

Selon une autre variante, l'une au moins de ces matières amylacées granulaires se présente sous la forme exclusive ou majoritaire de granules prégélatinisés, i.e présentant un ou plusieurs stades de gonflement.

Les mélanges solides précités peuvent être utilisés en l'état pour certaines applications. Cependant, dans la majorité des cas et en particulier lorsque chacune des matières amylacées se trouve à l'état cru, ces mélanges sont mis en suspension dans un liquide, de préférence de l'eau, en vue de préparer des suspensions ou " laits " présentant une matière sèche (" MS ") variable selon les traitements ultérieurs et applications finales envisagé(e)s. La MS peut être inférieure à 15 % lorsque le lait est destiné à être cuit puis utilisé en traitement interne du papier ou en pulvérisation. Dans ce dernier cas, des MS supérieures ou égales à 15 % sont également envisageables. La MS peut être (beaucoup) plus élevée (de l'ordre de 20 %, voire 44 %) lorsque le lait est destiné à la préparation d'adhésifs pour carton ondulé.

Les suspensions susdécrites peuvent également résulter du mélange, entre autres, d'un lait d'amidon cationique et d'un lait d'amidon sulfoné.

En suite de quoi, la présente invention a notamment pour objet une composition pour la fabrication de surfaces planes, caractérisée en ce qu'elle se présente sous la forme d'un mélange solide, de préférence pulvérulent, ou d'une suspension, de préférence aqueuse, contenant au moins une matière amylacée cationique granulaire et au moins une matière amylacée sulfonée granulaire.

De telles formes liquides ou solides peuvent ensuite subir, directement ou non, au moins un traitement apte à gélatiniser ou solubiliser, en tout ou partie, les matières amylacées qu'elles contiennent. Il peut s'agir en particulier d'un traitement de cuisson qui, à l'inverse des enseignements du brevet JP 08296193-A précité, peut être réalisé aussi bien sur un cuiseur discontinu, par exemple de type cuve ouverte ", que sur un cuiseur de type " jet-cooker " fonctionnant en continu.

La solubilisation ou gélatinisation au moins partielle des matières amylacées peut également associer un traitement thermique à un traitement chimique, par exemple une alcalinisation du milieu par la soude caustique.

Les compositions résultantes se présentent sous forme de solutions ou " colles " amylacées, lesquelles peuvent ou non encore contenir, y compris de façon majoritaire, des structures granulaires d'amidon cru ou à un stade quelconque de gonflement. De telles colles sont préférentiellement aqueuses et peuvent présenter une MS très variable. Celle-ci peut être inférieure ou égale à 10 %, par exemple de l'ordre de 0,5 à 5 %, lorsque la colle est destinée au traitement interne du papier ou de l'ordre de 6 à 10 % quand elle est destinée au surfaçage simple, i.e en l'absence de charges ou pigments. Elle peut être largement supérieure à 10 %, y compris se situer entre 20 et 60 %, pour des applications particulières en surfaçage ou pour le carton ondulé.

Les colles susdécrites peuvent également résulter du mélange, entre autres, d'une colle de matière amylacée cationique et d'une colle de matière amylacée sulfonée.

On préfère cependant que ces deux matières amylacées soient mises en présence l'une de l'autre au plus tard lors de l'opération de solubilisation permettant la préparation de la colle, de préférence avant ladite opération.

La Société Demanderesse a notamment observé que la présence puis la cuisson simultanées des deux matières amylacées au sein d'une même composition donnait généralement lieu à la formation puis à la floculation et la précipitation, au moins partielle, de structures insolubles pouvant être considérées comme des complexes associant ces deux matières.

Les complexes floculés/précipités peuvent être récupérés et éventuellement séchés, et constituer en tant que tels une composition selon l'invention.

De façon surprenante et inattendue et contrairement aux enseignements du brevet JP 08296193-A, il a été trouvé que :
- d'une part, la charge ionique et la solubilité de la colle floculée ne dépendaient pas ou dépendaient que dans une faible mesure du pH initial du lait soumis à cuisson ou du pH de la colle résultante, et
- d'autre part, la présence d'importantes structures floculées et précipitées ne détériorait pas, voire améliorait, les performances de la colle résultante.

Selon une variante, la composition selon l'invention se présente donc sous la forme d'une colle, de préférence aqueuse, caractérisée en ce qu'elle contient des structures amylacées non solubilisées, en particulier des structures granulaires, gonflées ou non, et/ou des complexes associant la matière amylacée cationique et la matière amylacée sulfonée.

La Société Demanderesse a par ailleurs observé que l'efficacité d'une composition selon l'invention pouvait être améliorée dès lors que l'une au moins des matières amylacées cationique(s) et sulfonée(s) était constituée d'amidon de céréale, en particulier d'amidon de maïs.

Dans le cadre de l'invention, on peut faire appel avantageusement, par exemple, 1) à une association entre un sulfosuccinate d'amidon de maïs et soit une fécule de pomme de terre cationique soit un mélange cationique entre une fécule de pomme de terre et un amidon de maïs cationiques ou 2) à une association entre un sulfosuccinate de fécule de pomme de terre et soit un amidon de maïs cationique soit un mélange cationique tel que précité.

En suite de quoi, on dispose désormais d'un nouveau moyen, simple et efficace, de fabrication de papier, carton, ce moyen étant apte à conférer auxdites structures des caractéristiques physiques répondant aux exigences de la pratique actuelle, voire dépassant ces exigences.

Ce moyen est particulièrement bien adapté, en particulier, au traitement interne, du papier et permet l'introduction avantageuse, en une ou plusieurs fois, de taux élevés de matières amylacées au sein de la masse constitutive desdites structures au cours de leur formation. Ces taux de mise en oeuvre se situent préférentiellement entre 2 % et 12 % environ, ces pourcentages étant exprimés en poids sec total de matières amylacées cationique(s) et sulfonée(s) sur le poids sec de la masse constitutive de la structure. Cette mise en oeuvre au sein du papier peut, comme indiqué, résulter de l'introduction, en une ou plusieurs fois, d'une composition selon l'invention en particulier en un ou plusieurs points de la machine à papier.

La présente invention va être décrite de façon encore plus détaillée à l'aide des exemples qui suivent et qui ne sont aucunement limitatifs.

### EXEMPLE 1 :

Dans le cadre de cet exemple, représentatif de conditions difficiles de préparation de papier (pâte à base de 100 % de vieux papiers), on étudie l'intérêt de compositions selon l'invention pour le traitement interne du papier, i.e comme additifs " de masse ".

L'une des compositions selon l'invention se présente initialement sous la forme d'un mélange solide pulvérulent constitué de 75 %, en poids, d'une fécule de pomme de terre cationique présentant un taux d'azote fixé de 0,6 % environ et de 25 %, en poids, d'une fécule de pomme de terre sulfosuccinylée d'un DS de 0,045 environ.

Ce mélange à l'état cru est mis en suspension dans de l'eau de sorte à obtenir un lait à 10 % de MS qui constitue également une composition conforme à l'invention.

Ce lait, qui contient des complexes associant les deux matières amylacées, est immédiatement traité thermiquement sur un appareil de cuisson en continu pendant 1 minute à 120°C. La colle obtenue, laquelle contient des complexes floculés et précipités, est diluée en ligne de telle sorte que sa MS finale est ajustée à 1 %.

La colle diluée résultante conforme à l'invention, ci-après désignée " COMPOSITION A ", est alors testée comme additif de masse au sein d'une pâte à base de vieux papiers présentant les caractéristiques suivantes :
concentration totale (g/l) : 14
cendres (450°C) totales (g/l) : 3,9
pH : 7,0
dureté (°TH) : 1000
conductivité (µs/cm) : 3500
résistivité (ohm.cm) : 280
charge ionique : 2,8 ml POLYDADMAC 0,001 N
solubles (g/l) : 3,6
cendres (450°C) totales (g/l) : 2,4
DCO (mg/l) : 1300
amidon soluble (g/l) : 0,7
aluminium soluble (mg/l) : 1

Dans un premier essai (ESSAI A1), la COMPOSITION A est introduite à raison de 4 % de matières amylacées, exprimés en sec par rapport à la teneur en matières sèches de la pâte. Le temps de contact entre la COMPOSITION A et la pâte est de 5 minutes.

Dans, respectivement, un second essai (ESSAI A2) et un troisième essai (ESSAI A3), la COMPOSITION A est introduite dans la pâte à raison, respectivement, de 6 et 8 %, le temps de contact étant maintenu à 5 minutes.

De la même façon on prépare puis on teste pour les trois taux d'introduction et le temps de contact susmentionnés, les colles suivantes :
- COMPOSITION B : colle non conforme à l'invention dans laquelle la fécule sulfosuccinylée telle qu'utilisée dans la COMPOSITION A est remplacée par un poids identique de fécule de pomme de terre succinylée (DS ≈ 0,05) non sulfonée.

Cette COMPOSITION B est introduite dans la pâte à raison de 4 % (ESSAI B1), 6 % (ESSAI B2) ou 8 % (ESSAI B3),
- COMPOSITION C : colle non conforme à l'invention
dans laquelle la matière amylacée anionique est une fécule de pomme de terre phosphatée. Cette colle est testée dans les ESSAIS C1, C2, et C3 en fonction de son taux d'introduction (respectivement 4, 6 et 8 %).
- COMPOSITION D: colle conforme à l'invention, identique à la COMPOSITION A si ce n'est que la matière amylacée sulfonée est un amidon de maïs sulfosuccinylé (DS = 0,045). Cette colle est testée dans les ESSAIS D1, D2 et D3 en fonction de son taux d'introduction (respectivement 4, 6 et 8 %).

Pour chacune des COMPOSITIONS A, B, C et D et pour chacun des taux d'introduction (4,6 et 8 %) on mesure les paramètres ci-après :
- taux de fixation d'amidons ou "RA " en %,
- taux de rétention totale ou " RT " en %,
- cohésion interne des feuilles obtenues (selon test SCOTT-BOND) ou " CI " en joules/m² (J/m²)

Les paramètres de rétention totale et de cohésion interne sont par ailleurs mesurés dans le cadre d'un essai témoin (ESSAI T) dans lequel aucune matière amylacée n'a été introduite.

On obtient les résultats suivants :

| | RA (%) | RT (%) | CI(J/M²) |
|---|---|---|---|
| ESSAI T | ____ | 87,9 | 155 |
| ESSAI A1* | 100 | 89,4 | 255 |
| ESSAI A2* | 94 | 87,9 | 331 |
| ESSAI A3* | 81 | 86,3 | 362 |
| ESSAI B1 | 96 | 87,0 | 249 |
| ESSAI B2 | 77 | 85,3 | 324 |
| ESSAI B3 | 69 | 83,2 | 355 |
| ESSAI C1 | 92 | 87,1 | 251 |
| ESSAI C2 | 69 | 85,2 | 263 |
| ESSAI C3 | 63 | 83,4 | 323 |
| ESSAI D1** | 100 | 89,0 | 246 |
| ESSAI D2** | 100 | 88,3 | 307 |
| ESSAI D3** | 97 | 84,8 | 379 |

| | | | |
|---|---|---|---|
| * essai conforme à l'invention | | | |

Ces résultats montrent globalement que les COMPOSITIONS A et D conformes à l'invention, i.e. contenant une matière amylacée sulfonée, en l'occurrence sulfocarboxylée, en association avec une matière amylacée cationique, sont plus performantes que des compositions dont la composante amylacée anionique n'est pas sulfonée, en particulier carboxylée (COMPOSITION B) ou phosphatée (COMPOSITION C).

Il est remarquable de noter que les avantages apportés par les compositions selon l'invention (amélioration des indices RA et RT et de la cohésion interne CI) se manifestent pour l'ensemble des taux d'introduction étudiés.

Ces compositions permettent d'atteindre et ce, même avec une pâte difficile (vieux papiers) et à des niveaux d'introduction relativement importants (6 et 8 %), des taux de fixation en amidons et de rétention totale remarquablement élevés. Ces compositions peuvent donc être avantageusement utilisées pour améliorer les caractéristiques physiques, en particulier la cohésion interne, des papiers obtenus et ce, sans risque de pertes importantes en matières amylacées et fibreuses au niveau des eaux sous toile.

### EXEMPLE 2 :

Une colle selon l'invention (ci-après désignée COMPOSITION E) est préparée dans les mêmes conditions que celles décrites pour l'EXEMPLE 1 si ce n'est que 1) le mélange solide initial mis en lait puis solubilisé contient 50 %, en poids, d'un amidon de maïs sulfosuccinylé (DS ≈ 0,045) et 2) la MS de la colle est de 1,8 % au lieu de 1 %.

Cette colle, fortement floculée, est testée sur une pâte à base entièrement de fibres cellulosiques de récupération et présentant notamment une dureté (> 400°TH), une conductivité (> 800 µs/cm), une teneur en solubles (> 20g/l) et une DCO (> 30g/l) particulièrement élevées.

La COMPOSITION E est d'abord évaluée pour 4 niveaux d'introduction (4, 6, 8 et 10 % sec/sec) et 2 temps de contact (35 sec. et 5 min.) en vue de mesurer le taux de fixation en matières amylacées.

Les résultats obtenus sont remarquables car dans tous les cas on obtient un taux de fixation au moins égal à 90 %.

Pour un temps de contact long (5 min.), ce taux est notamment de 99 % pour un niveau d'introduction de 4 % et de 94 % pour un niveau d'introduction de 6 %. Pour un temps de contact court (35 sec.) ce taux est notamment de 95 % pour les niveaux d'introduction de 8 et 10 %.

La COMPOSITION E a ensuite été évaluée à 3 niveaux d'introduction (4,6 et 8 %) et un temps de contact long (5 min) en vue de mesurer la cohésion interne (indice SCOTT-BOND) ainsi que la résistance à l'éclatement (indice MULLEN selon norme ISO 2758) du papier résultant.

Les résultats obtenus ont montré, par rapport à un papier témoin non adjuvanté de colle amylacée :
- une augmentation de la cohésion interne de 40 % (taux d'introduction: 4 %) à 90 % (taux d' introduction : 8 %),
- une augmentation concomitante de la résistance à l'éclatement de 25 à 48 %.

Par ailleurs une étude de l'influence de la COMPOSITION E sur le taux de rétention totale a donné, dans le cas présent, des résultats égaux ou légèrement inférieurs à ceux observés avec une pâte non adjuvantée de colle amylacée. Ces résultats particuliers ont été jugés globalement satisfaisants compte-tenu en particulier de la nature de la pâte.

Ces résultats confirment l'intérêt des compositions selon l'invention comme moyen de traitement interne du papier, notamment en vue d'en améliorer les caractéristiques physiques. De telles compositions peuvent, en particulier, être efficacement utilisées dans des conditions difficiles (pâtes à 100 % de vieux papiers) et pour des taux d'usage relativement élevés, par exemple compris entre 4 et 10 %.

Il est ainsi possible d'envisager de supprimer, en tout ou partie, tout traitement de surfaçage éventuellement mis en oeuvre dans la pratique antérieure pour atteindre les caractéristiques physiques du même ordre.

Une autre approche consiste à augmenter le taux de charges minérales du papier aux dépens du taux de fibres (matière première plus coûteuse que les charges) et à compenser la baisse résultante des caractéristiques physiques du papier par un apport supplémentaire d'amidons, rendu possible par la mise en oeuvre de la composition selon l'invention.

Des essais complémentaires mettant en oeuvre une composition (COMPOSITION F ou G) selon l'invention composée de :
- 50%, en poids, d'une fécule de pomme de terre cationique présentant un taux d'azote fixé de 1,2% environ, et
- 50% en poids, soit a) d'une fécule de pomme de terre sulfosuccinylée d'un DS de 0,045 environ (COMPOSITION F), soit b) d'un amidon de maïs sulfosuccinylé d'un DS de 0,045 environ (COMPOSITION G), ont globalement confirmé les résultats et conclusions des essais décrits précédemment.

Par ailleurs, chacune des COMPOSITIONS F et G susmentionnées a été testées de la façon suivante :
- à raison de 2%, en poids, au sein de la masse constitutive de la feuille de papier et ce, par mise en oeuvre sous forme de colle amylacée, puis,
- à raison de 2%, en poids, en surface de la feuille de papier formée mais non encore pressée/séchée et ce, par mise en oeuvre sous forme d'un lait amylacé à 10% environ de MS, floculé, ledit lait étant pulvérisé sur la feuille au moyen d'une rampe de pulvérisation.

En outre, la COMPOSITION G a été testée de la façon suivante :
- à raison de 1,5%, en poids, en application "de masse" au niveau du cuvier de pâte épaisse et ce, sous la forme d'une colle, amylacée puis
- à raison encore de 1,5%, en poids, sous forme de lait amylacé floculé et non solubilisé, introduit dans le circuit de pâte diluée (en aval de l'épurateur sous pression).

Ces essais ont globalement confirmé les résultats et conclusions des essais décrits précédemment, notamment en termes d'amélioration très significative de la cohésion interne et de l'indice d'éclatement des papiers obtenus.

En outre, ces essais ont montré une amélioration également très significative (i.e. d'au moins 20%) des valeurs de "CMT 30" obtenues sur un papier pour ondulé de type couverture.

Il convient de rappeler que l'indice "CMT 30" est particulièrement adapté à l'évaluation d'un papier cannelure pour carton ondulé et notamment à la détermination de la résistance à la compression à plat d'un tel papier.

Et il est remarquable de noter que des améliorations d'indice "CMT 30" ont été obtenues sur un papier couverture alors que la machine à papier, en cette occasion, n'était pas réglée pour la fabrication d'un tel papier.

En suite de quoi, la mise en oeuvre d'une composition selon l'invention permet d'envisager des gains de CMT d'au moins 20% et ce, pour tous types de papiers pour ondulé (couverture et cannelure).

Ceci est d'autant plus surprenant que, comme l'a constaté la Demanderesse, de tels gains ne nuisent pas aux autres caractéristiques de tels papiers (porosité, mouillabilité, ...) ni à la mise en oeuvre ultérieure de tels papiers au niveau de la cartonnerie. Or de telles nuisances sont généralement rencontrées avec des papiers surfacés en "size press".

Cela confirme l'intérêt des compositions dans l'optique de la suppression, totale ou non, de dispositifs de type "size press".

### EXEMPLE 3 :

Dans le cadre de cet exemple, on étudie les propriétés émulsifiantes d'une composition (COMPOSITION H) selon l'invention constituée de :
- 90%, en poids (sec/sec) d'une fécule de pomme de terre cationique présentant un DS d'environ 0,04, et
- 10%, en poids (sec/sec) d'une fécule de pomme de terre sulfosuccinylée présentant un DS d'environ 0,045.

La COMPOSITION H est traitée sur un appareil de cuisson en continu dans les conditions suivantes :
- lait de COMPOSITION H à 10% de MS,
- température de cuisson : 120°C,
- durée de cuisson : 1 minute.

A partir de ce traitement, on prépare une colle à 6% de MS. A 100 g de ladite colle, contenant donc 6 g au total de matières amylacées, on ajoute 3 g de l'agent de collage "FIBRAN 76" à base d'anhydride alcénylsuccinique ("ASA").

La composition de collage obtenue, laquelle présente un rapport pondéral matières amylacées (poids sec) / agent de collage de 2/1, est ensuite soumise à un traitement important de cisaillement, à savoir une homogénéisation 5 minutes à 20.000 tours/minute.

L'émulsion ainsi obtenue est ensuite diluée, sans agitation, avec de l'eau de forage dans une fiole jaugée de 1 litre de façon à obtenir une émulsion de "FIBRAN 76" à 0,3% d'agent de collage.

Des observations menées périodiquement pendant une durée de 5 heures montrent que l'émulsion d'agent de collage ainsi obtenue reste parfaitement stable et homogène.

## Revendications

1. Procédé de fabrication de papier ou de carton comprenant le traitement interne dudit papier ou dudit carton, **caractérisé en ce que** l'on met en oeuvre, dans ladite étape de traitement interne, une composition qui contient au moins une matière amylacée cationique et au moins une matière amylacée sulfonée, celle-ci étant choisie dans le groupe comprenant les amidons sulfocarboxylés, les amidons sulfoalcoylés et les amidons sulfoalcénylés.

2. Procédé selon la revendication 1 **caractérisé en ce que** la matière amylacée sulfonée est choisie parmi les amidons monosulfocarboxylés et disulfocarboxylés.

3. Procédé selon l'une des revendications 1 ou 2, **caractérisé en ce que** la composition présente un rapport pondéral entre matière(s) amylacée(s) cationique(s) d'une part et matière(s) amylacée(s) sulfonée(s) d'autre part, compris entre 10 / 1 et 1 / 10, de préférence entre 10 / 1 et 1 / 5 et encore plus préférentiellement entre 5 / 1 et 1 / 4.

4. Procédé selon l'une quelconque des revendications 1 à 3, **caractérisé en ce que** la composition se présente sous la forme d'un mélange solide, de préférence pulvérulent, ou d'une suspension, de préférence aqueuse, contenant au moins une matière amylacée cationique granulaire et au moins une matière amylacée sulfonée granulaire.

5. Procédé selon l'une quelconque des revendications 1 à 3, **caractérisé en ce que** la composition se présente sous la forme d'une colle, de préférence aqueuse.

6. Procédé selon la revendication 5, **caractérisé en ce que** la composition contient des structures amylacées non solubilisées, en particulier des structures granulaires, gonflées ou non, et/ou des complexes associant la matière amylacée cationique à la matière amylacée sulfonée.

7. Procédé selon l'une quelconque des revendications 1 à 6, **caractérisé en ce que** l'une au moins des matières amylacées de la composition est constituée d'amidon de céréale, en particulier d'amidon de maïs.

8. Procédé comprenant le traitement interne du papier selon l'une quelconque des revendications 1 à 7, **caractérisé en ce que** la composition est mise en oeuvre au sein de la masse constitutive du papier et au cours de sa formation, en une ou plusieurs fois, de préférence à raison d'une quantité de 2 à 12 %, exprimée en poids sec total de matière(s) amylacée(s) cationique(s) et sulfonée(s) sur le poids sec de la masse constitutive dudit papier.

## Claims

1. A method for producing paper or paper board, comprising the internal treatment of said paper or paper board, **characterized in that** in said internal treatment step a composition is used that comprises at least one cationic starch material and at least one sulfonated material, the latter being selected from the group comprising sulfocarboxylated starches, sulfoalkoylated starches and sulfoalkenylated starches.

2. The method as claimed in claim 1, **characterized in that** the sulfonylated material is selected from monosulfocarboxylated and disulfocarboxylated starches.

3. The method as claimed in one of claims 1 or 2, **characterized in that** the weight ratio of the cationic material(s) to the sulfonated material(s), in the composition, is of between 10/1 and 1/10, preferably between 10/1 and 1/5 and more preferably between 5/1 and 1/4.

4. The method as claimed in any one of claims 1 to 3, **characterized in that** the composition is in the form of a solid mixture, preferably a powdered material, or a suspension, preferably an aqueous suspension, containing at least one granular cationic material and at least one granular sulfonated material.

5. The method as claimed in any one of claims 1 to 3, **characterized in that** the composition is a glue, preferably an aqueous glue.

6. The method as claimed in claim 5, **characterized in that** the composition contains non-solubilized starchy structures, in particular granular structures, whether swollen or not, and/or complexes associating the cationic material with the sulfonated material.

7. The method according to any one of claims 1 to 6, **characterized in that** at least one of the materials of the composition consists of a cereal starch, in particular corn starch.

8. The method comprising an internal treatment of paper according to any of claims 1 to 7, **characterized in that** the composition is incorporated into the paper mass during its formation, in one or more steps, preferably in an amount of 2 to 12 %, expressed as total dry weight of cationic and sulfonated materials based on the dry weight of the paper mass.

## Patentansprüche

1. Verfahren zur Herstellung von Papier oder Karton, das die interne Behandlung des Papiers oder Kartons umfasst, **dadurch gekennzeichnet, dass** in dem Schritt der internen Behandlung eine Zusammensetzung eingesetzt wird, die wenigstens ein kationisches Stärkematerial und wenigstens ein sulfoniertes Stärkematerial enthält, wobei dieses ausgewählt ist aus der Gruppe, die die sulfocarboxylierten Stärken, die sulfoalkylierten Stärken und die sulfoalkenylierten Stärken umfasst.

2. Verfahren nach Herstellung 1, **dadurch gekennzeichnet, dass** das sulfonierte Stärkematerial ausgewählt ist unter monosulfocarboxylierten und disulfocarboxylierten Stärken.

3. Verfahren nach einem der Ansprüche 1 oder 2, **dadurch gekennzeichnet, dass** die Zusammensetzung ein Gewichtsverhältnis zwischen einerseits kationischem Stärkematerial (kationischen Stärkematerialien) und andererseits sulfoniertem Stärkematerial (sulfonierten Stärkematerialien) zwischen 10/1 und 1/10, vorzugsweise zwischen 10/1 und 1/5 und besonders bevorzugt zwischen 5/1 und 1/4 aufweist.

4. Verfahren nach einem beliebigen der Ansprüche 1 bis 3, **dadurch gekennzeichnet, dass** die Zusammensetzung in Form eines festen, vorzugsweise pulverförmigen Gemischs oder einer vorzugsweise wässrigen Lösung vorliegt, das/die wenigstens ein granulares kationisches Stärkematerial und wenigstens ein granulares sulfoniertes Stärkematerial enthält.

5. Verfahren nach einem beliebigen der Ansprüche 1 bis 3, **dadurch gekennzeichnet, dass** die Zusammensetzung in Form eines vorzugsweise wässrigen Klebers vorliegt.

6. Verfahren nach Anspruch 5, **dadurch gekennzeichnet, dass** die Zusammensetzung nicht solubilisierte Stärkestrukturen, insbesondere gequollene oder nicht gequollene granulare Strukturen und/oder Komplexe enthält, die das kationische Stärkematerial mit dem sulfonierten Stärkematerial assoziieren.

7. Verfahren nach einem beliebigen der Ansprüche 1 bis 6, **dadurch gekennzeichnet, dass** wenigstens eines der Stärkematerialien der Zusammensetzung durch eine Getreidestärke, insbesondere Maisstärke gebildet ist.

8. Die interne Behandlung des Papiers umfassendes Verfahren nach einem beliebigen der Ansprüche 1 bis 7, **dadurch gekennzeichnet, dass** die Zusammensetzung innerhalb der das Papier bildenden Masse und im Laufe von deren Bildung ein oder mehrere Male, vorzugsweise in einem Mengenverhältnis von 2 bis 12 %, ausgedrückt als Gesamttrockenmasse der kationischen und sulfonierten Stärkematerialien zur Trockenmasse der das Papier bildenden Masse, eingesetzt wird.
